# EUROPÄISCHE PATENTSCHRIFT

(11) **EP 2 301 796 B1**
(45) Veröffentlichungstag und Bekanntmachung des Hinweises auf die Patenterteilung: **17.02.2016**
(21) Anmeldenummer: 10178138.3
(22) Anmeldetag: 22.09.2010
(51) Int. Cl.: B60N 2/66, B60N 2/22, B60N 2/68, A47C 1/032, A47C 1/033, A47C 7/46

(54) **FAHRZEUGSITZ MIT VERFORMBARER KONTOUR DER RÜCKENLEHNE**
VEHICLE SEAT WITH DEFORMABLE CONTOUR OF THE BACKREST
SIÈGE DE VÉHICULE DOTÉ D'UN DOSSIER À CONTOUR DÉFORMABLE

(30) Priorität: 29.09.2009 DE 102009043297
(43) Veröffentlichungstag der Anmeldung: 30.03.2011
(73) Patentinhaber: GRAMMER AG, 92224 Amberg (DE)
(72) Erfinder: Meiller, Hermann, 92533 Wernberg-Köblitz (DE)
(74) Vertreter: Hannke, Christian

(56) Entgegenhaltungen:
- JP-U- H01 150 032
- US-A- 2 981 314
- US-A- 3 224 808

## Beschreibung

Die Erfindung betrifft einen Fahrzeugsitz umfassend einen Sitzrahmen zum Vorgeben einer Sitzform, wobei der Sitzrahmen zumindest einen Rückenlehnenrahmenbereich und einen dazu unbeweglichen Sitzflächenrahmenbereich aufweist.

Bisherige Fahrzeugsitze, insbesondere Bahnfahrzeugsitze, sind derart ausgestattet, dass sie zum Verstellen einer Rückenlehne einen Schwenkbereich aufweisen, in dem die Rückenlehne schwenkbar gegenüber einem Sitzteil des Fahrzeugsitzes angeordnet ist. Auf eine Betätigung eines Knopfes oder eines Hebels hin wird das Rückenlehnenteil nach hinten oder nach vorne verschwenkt, um eine komfortablere Sitzposition für den Sitzbenutzer bzw. Passagier zu erhalten.

Nachteilhaft ergibt sich bei derartig ausgestalteten Bahnfahrzeugsitzen, dass bei zurückgeschwenkter Rückenlehne eine Beeinträchtigung der Beinfreiheit des dahinter sitzenden Passagiers stattfindet, so dass dieser Passagier unter Umständen nicht den nötigen Sitzkomfort erhalten kann.

Diese Art von Fahrzeugsitzen zeichnet sich dadurch aus, dass der Rückenlehnenbereich zusammen mit dem dazugehörigen Rahmen als Rückenlehnenrahmenbereich gegenüber dem Sitzflächenrahmenbereich nach hinten oder nach vorne verschwenkt wird.

Alternativ existieren auch Fahrzeugsitze, insbesondere Bahnfahrzeugsitze, die derart ausgestaltet sind, dass das Sitzteil bzw. ein gepolstertes Sitzteil gegenüber einem darunter liegenden Sitzflächenrahmenbereich nach vorne oder nach hinten verschoben werden kann, wodurch ein Polsterrückenteil in seinem unteren Bereich mit nach vorne oder nach hinten gezogen wird. Mit einem nach vorne ziehenden Polstersitzanteil entsteht somit zumindest in dem unteren Bereich der Rückenlehne zwar ein Rückenlehnenanteil mit geringerer Steigung, und somit auch mit einem höheren Sitzkomfort. Allerdings weist der Polsterrückenanteil durch dieses Mitziehen eine nach hinten gerichtete die Kyphosestellung eines Passagiers unterstützende Ausbuchtung auf, die bei vielen Benutzern des Fahrzeugsitzes auch in dieser eher liegenden Stellung eher unerwünscht ist. Alternativ ist dieser untere nach vorne gezogene Rückenlehnenanteil ohne Ausbuchtung planar ausgebildet, wobei dies ebenso von vielen Besuchern unerwünscht ist, da eine derartige planare Ausbildung keine Anpassung des Rückenlehnenanteils an den Rücken des Benutzers im Lendenwirbelbereich darstellt.

So zeigt die Druckschrift US 3,224,808 A einen Fahrzeugsitz nach dem Oberbegriff des Anspruchs 1, mit einem im Sitzpolster integrierten Sitzrahmen, mittels welchem verschiedene Stellungen des Sitzes eingenommen werden können. Die beteiligten Elemente weisen nicht zuletzt durch ihre Unterteilung in mehrere Teile einen komplizierten Aufbau auf und sind zueinander beweglich ausgestaltet. Ein ergonomischer Verlauf der Rückenlehne wird nicht gezeigt.

Weiterhin zeigt die Druckschrift US 2,981,314 A einen Fahrzeugsitz mit einer aus zwei Teilen bestehenden Sitzschale, welcher weder eine Möglichkeit zum Vorgeben einer Sitzform noch einen ergonomischer Verlauf der Rückenlehne aufweist.

Demzufolge liegt der vorliegenden Erfindung die Aufgabe zugrunde, einen Fahrzeugsitz zur Verfügung zu stellen, der bei einer veränderten Sitzposition, insbesondere mit einer weniger steilen Steigung der Rückenlehne, keine Beeinträchtigung der dahinter sitzenden Person und dem ihr zur Verfügung stehenden Raum zulässt und zugleich einen erhöhten Sitzkomfort derjenigen Person zur Verfügung stellt, die diesen Fahrzeugsitz benutzt. Außerdem soll ein möglichst einfacher Aufbau bereitgestellt werden, welcher gleichzeitig den Komfort für den Sitzinsassen erhöht.

Diese Aufgabe wird durch die Merkmale des Patentanspruches 1 gelöst.

Kerngedanke der Erfindung ist es, dass bei einem Fahrzeugsitz umfassend einen Sitzrahmen zum Vorgeben einer Sitzform mit zumindest einem Rückenlehnenrahmenbereich und einem dazu unbeweglichen Sitzflächenrahmenbereich sowie mit einem den Sitzrahmen zumindest teilweise kontaktierenden Polsterelement, welches zumindest einen Polstersitzanteil aufweist, der in Sitzlängsrichtung gegenüber dem Sitzflächenrahmenbereich bewegbar ist, und einem Polsterrückenanteil aufweist, der zumindest teilweise in Sitzlängsrichtung gegenüber dem Rückenlehnenrahmenbereich bewegbar ist, ein sitzschalenartiges Element, welches einen Rückenabschnitt und einen Sitzflächenabschnitt aufweist, zwischen dem Polsterelement und dem Sitzrahmen in Sitzlängsrichtung verschiebbar anzuordnen, wobei das sitzschalenartige Element (18) einstückig ausgebildet ist, und wobei eine sich im Wesentlichen in Sitzbreitenrichtung erstreckende Kante (24) des Rückenabschnitts (19) angeordnet ist, welche auf Höhe des Lendenwirbelbereichs (25) einer den Fahrzeugsitz benutzenden Person angeordnet ist und in einem links- und rechtsseitigen Bereich mehr nach vorne ausgerichtet und in einem mittleren Bereich wölbungsartig nach hinten geneigt ist.

Ein derartiges sitzschalenartiges Element weist erfindungsgemäß einen Rückenabschnitt und einen Sitzflächenabschnitt auf und ist erfindungsgemäß einstückig ausgebildet. Im Bereich des Rückenabschnittes des sitzschalenartigen Elements wird eine Kante, vorzugsweise eine oberseitig durch das obere Ende des sitzschalenartiges Elementes sich automatisch ergebende Kante dazu verwendet, im Lendenwirbelbereich einer dem Fahrzeugsitz benutzenden Person eine nach vorne gerichtete Wölbung des Polsterelementes zu erhalten. Dies hat vorteilhaft zur Folge, dass eine lordosestützende Rückenlehne selbst dann erhalten werden kann, wenn der Polstersitzanteil zusammen mit dem sitzschalenartigen Element nach vorne verschoben wird. Vorteilhaft wird hierdurch erreicht, dass das Polsterelement im Lendenwirbelbereich der Person über die Kante umgelenkt bzw. gewölbt wird und somit eine Stütze für den Personenrücken im Lendenwirbelbereich darstellt.

Insbesondere ist zu betonen, dass selbst wenn das sitzschalenartige Element in seiner maximal nach vorne verschobenen Position angeordnet ist, auch weiterhin eine lordosestützende Form der Rückenlehne erhalten wird, wobei oberhalb des Lendenwirbelbereichs der Rücken durch die nun größere Steigung des Polsterrückenanteiles in eine nach hinten geneigten Position angeordnet ist. Dies ermöglicht ein erhöhten Sitzkomfort aufgrund der nunmehr bestehenden zurückgeneigten Ausrichtung des Rückens und zugleich eine lordosestützende Position bzw. Stellung des Polsterrückenanteiles im Bereich der Lendenwirbel.

Somit kann die den Sitz benutzende Person entgegen den bisher bekannten Sitzkomfortstellungen eine Komfortstellung mit zurück geneigten Rücken bei gleichzeitiger lordosestützender Stellung annehmen, ohne dass hierdurch eine Beinfreiheit der dahinter sitzenden Person beeinträchtigt wird. Denn der Rückenlehnenrahmenbereich an sich bleibt auch weiterhin in seiner ursprünglichen Neigungsposition, während der Polsterrückenanteil in seinem oberhalb des Lendenwirbelbereichs bestehenden Bereiches verstärkt nach hinten geneigt ist.

Vorteilhaft kann gemäß einer bevorzugten Ausführungsform das sitzschalenartige Element derart ausgebildet sein, dass es mit seinem Rückenabschnitt und der dazugehörigen mindestens einen Kante bereits in der eingeschobenen Position des Polstersitzanteils eine lordosestützende Stellung bewirkt, die bei der ausgezogenen Position des Polstersitzanteils und damit des sitzschalenartigen Elementes durch das Nachhintenneigen des Polsterrückenanteiles im oberen Bereich noch verstärkt als lordosestützender Effekt vorhanden ist.

Der Rückenabschnitt und der Sitzflächenabschnitt des sitzschalenartigen Elementes, auch Sitzschale genannt, ist mit einem Winkel aus einem Bereich von 80° - 160°, vorzugsweise von 110° - 140°, zueinander angeordnet.

Bevorzugt ist eine Erstreckung des Rückenabschnittes in Sitzhöhenrichtung über eine Entfernung über 10 cm - 70 cm und noch bevorzugter von 25 cm - 50 cm gegeben. Dies ermöglicht, dass der Rückenabschnitt des sitzschalenartigen Elementes sich auf den unteren Bereich des Rückens einer Person beschränkt, also beispielsweise von unten betrachtet bis in den Bereich der Lendenwirbel. Somit kann auf einfache Art und Weise eine Umlenkung bzw. Wölbung des Polsterelementes über die oberseitige Kante des Rückenabschnittes des sitzschalenartigen Elementes, insbesondere bei Verschieben des Elementes in seine vordere Stellung erfolgen. Dies hat die erwähnte lordosestützende Stellung des Polsterelementes zur Folge.

Die erwähnte Kante ist erfindungsgemäß als eine sich im Wesentlichen in Sitzbreitenrichtung erstreckende Kante des Rückenabschnittes des sitzschalenartigen Elementes auf Höhe des Lendenwirbelbereichs ausgebildet. Hierbei ist die Kante bevorzugt derart angeordnet, dass bei einem Nachvorneverschieben des sitzschalenartigen Elementes der Polsterrückenanteil durch eine Umlenkung der Kante eine in Sitzlängsrichtung betrachtet nach vorne gerichtete Auswölbung aufweist.

Zwar kann die Kante - wie bereits erwähnt - als oberseitige Abschlusskante des Rückenabschnittes des sitzschaligen Elementes ausgebildet sein. Jedoch ist auch denkbar, dass die Kante als in Sitzlängsrichtung betrachtet vorderseitig am Rückenabschnitt des sitzschaligen Elementes angebrachter Vorsprung ausgebildet ist, wobei sich der Vorsprung ebenso in Fahrzeugsitzbreitenrichtung erstreckt. Somit findet eine Wölbung des Polsterelementes über den vorderseitig angebrachten Vorsprung statt, wobei das Polsterelement ober- und unterhalb des Vorsprunges auf dem Rückenabschnitt, der sich beispielsweise schräg nach hinten erstreckt, abliegen kann, um hierdurch eine Wölbung mit der gewünschten Form oder eine Verstärkung des Wölbungseffektes zu erhalten.

Die Kante weist somit in Fahrzeugsitzbreitenrichtung betrachtet einen an rückenspezifische Formen einer Person angepassten Verlauf auf. Erfindungsgemäß ist die Kante im links- und rechtsseitigen Bereich mehr nach vorne ausgerichtet, wohingegen sie zwischen diesen beiden Endbereichen, nämlich den mittleren Bereich, wölbungsartig nach hinten geneigt ist. Hierdurch ergibt sich eine in Fahrzeugbreitenrichtung betrachtet schalenförmige Form des darüberliegenden Polsterelementes, welches den Sitzkomfort des Fahrzeugsitzes erhöht.

Selbstverständlich könnten alternativ zu dem blechartig verarbeiteten Metall sämtliche andere Materialien für die Herstellung des sitzschalenartigen Elementes verwendet werden. Beispielsweise kann zur Gewichtseinsparung das sitzschalenartige Element aus Kunststoff hergestellt werden. Vorteilhaft ist hierbei auch, dass die Ausbildung eines Gleitmechanismus oder beispielsweise Rollmechanismus unterseitig an dem sitzschalenartigen Element mit einfacheren Mitteln erfolgen kann. Dieser Gleit- bzw. Rollmechanismus kann auch bei Verwendung von Metallstoffen als Führungsschiene und damit wechselwirkenden Führungsnuten ausgebildet sein. Ein derartiger Mechanismus dient zum Durchführen der Verschiebebewegung des sitzschalenartigen Elements gegenüber dem Sitzrahmen, um hierdurch ein Verschieben des Polstersitzanteiles in Vorwärts- und Rückwärtsrichtung bezogen auf die Sitzlängsrichtung zu ermöglichen.

Der Polsterrückenanteil weist vorteilhaft für das Einnehmen verschiedener Verschiebestellungen des sitzschalenartigen Elementes Materialien und Abschnitte auf, die ein Dehnen und/oder Verschieben des Polsterrückenanteiles in Höhenrichtung ermöglichen. Dies ist notwendig, um bei einem nach vorne Ziehen des Polstersitzanteiles eine mehr oder weniger für den Benutzer geschlossene Polsteroberfläche beizubehalten, wenn hierdurch eine Verlängerung des Polsterelementes in seiner Gesamtlänge erforderlich ist.

Weitere vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen. Hierbei zeigen:
- Fig. 1: in einer schematischen Darstellung eine Seitenansicht eines Fahrzeugsitzes gemäß dem Stand der Technik;
- Fig. 2: in einer schematischen Darstellung eine Seitenansicht des erfindungsgemäßen Fahrzeugsitzes gemäß einer ersten Ausführungsform in einer ersten Position; und
- Fig. 3: in einer schematischen Darstellung die Seitenansicht eines erfindungsgemäßen Fahrzeugsitzes gemäß der ersten Ausführungsform in einer zweiten Position.

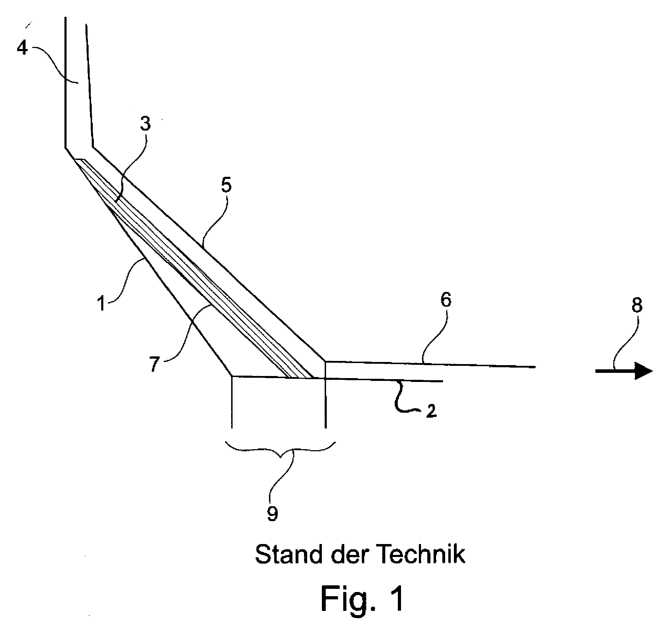

In Fig. 1 wird gemäß dem Stand der Technik in einer schematischen Darstellung ein Fahrzeugsitz gezeigt, wie er bisher verwendet wird. Dieser Darstellung ist zu entnehmen, dass ein Sitzrahmen 1 mit einem Sitzflächenrahmenbereich 2 und einem Rückenlehnenrahmenbereich 3 ausgestattet ist, wobei der Rückenlehnenrahmenbereich und der Sitzflächenrahmenbereich in ihrer Neigung fest zueinander angeordnet sind.

Ein Polsterelement 4 weist ein Polsterrückenanteil 5 und ein Polstersitzanteil 6 auf, wobei der Polstersitzanteil 6 gemäß dem Pfeil 8 nach vorne verschoben werden kann.

Durch ein derartiges Nachvorneverschieben des Polstersitzanteils 6 wird eine Stütze 7, die im unteren Bereich der Rückenlehne angeordnet ist, ebenso mit nach vorne gezogen, um hierdurch im unteren Bereich der Rückenlehne der Person eine Liegestellung zur Verfügung zu stellen.

Derartige Fahrzeugsitze sind nachteilhaft nicht mit lordose- oder kyphoseunterstützenden Rückenlehnenbereichen ausgestattet, wie der Darstellung gemäß Fig. 1 deutlich zu entnehmen ist. Eine Verschiebung des Polstersitzanteiles in Richtung des Pfeils 8 wird durch die Entfernung 9 wiedergegeben.

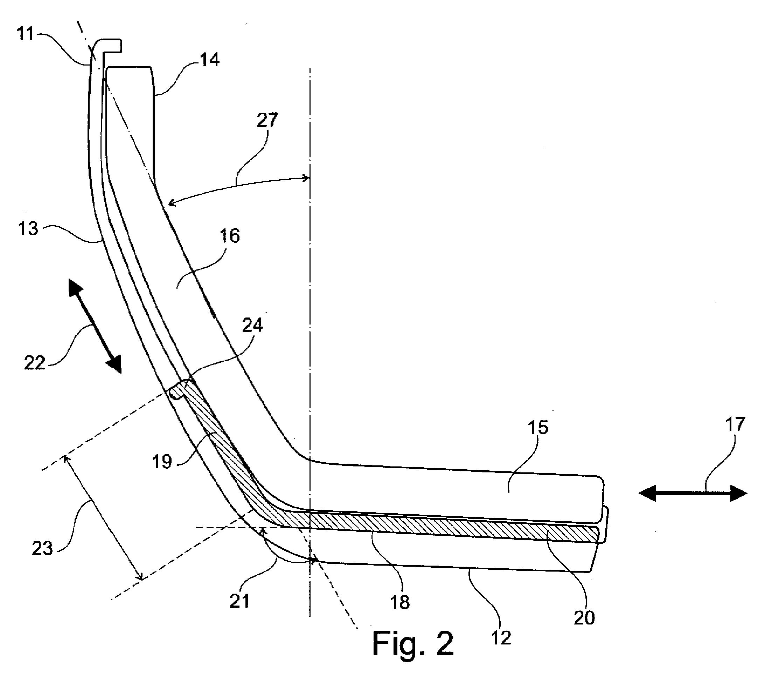

In Fig. 2 sind in einer schematischen Darstellung eine Seitenansicht eines Fahrzeugsitzes gemäß einer ersten Ausführungsform der Erfindung in einer ersten Position dargestellt. Dieser Fahrzeugsitz weist einen Sitzrahmen 11 auf, der sowohl einen Sitzflächenrahmenbereich 12 als auch einen Rückenlehnenrahmenbereich 13 umfasst.

Ein Polsterelement 14 setzt sich aus einem Polstersitzanteil 15 und einem Polsterrückenanteil 16 zusammen.

Der Polstersitzanteil 15 kann gemäß des Doppelpfeils 17 in Sitzlängsrichtung, also nach vorne und nach hinten verschoben werden, in dem er zusammen mit einem darunter angeordneten sitzschalenartigen Element, auch Sitzschale 18 genannt, verschoben wird.

Die Sitzschale 18 weist einen Rückenabschnitt 19, der sich entlang der Rückenlehne des Fahrzeugsitzes erstreckt, und einen Sitzflächenabschnitt 20 auf. Der Rückenabschnitt und der Sitzflächenabschnitt 20 der Sitzschale 18 sind mit einem Winkel 21 zueinander angeordnet, der vorzugsweise dauerhaft eingestellt ist.

Der Rückenabschnitt 19 der Sitzschale 18 weist in Höhenrichtung 22 des Fahrzeugsitzes eine begrenzte Ausdehnung auf, wie es durch die Entfernung 23 dargestellt wird. Am Ende des Rückenabschnittes der Sitzschale 18 ist eine Kante 24 angeordnet, die vorzugsweise gewölbt ausgebildet ist, um Beschädigungen des davor liegenden Polsterelementabschnittes zu vermeiden.

In dieser ersten Position des Fahrzeugsitzes gemäß Fig. 2 ist der Polsterrückenanteil 16 gegenüber der Vertikalen mit einem Winkel 27 angeordnet.

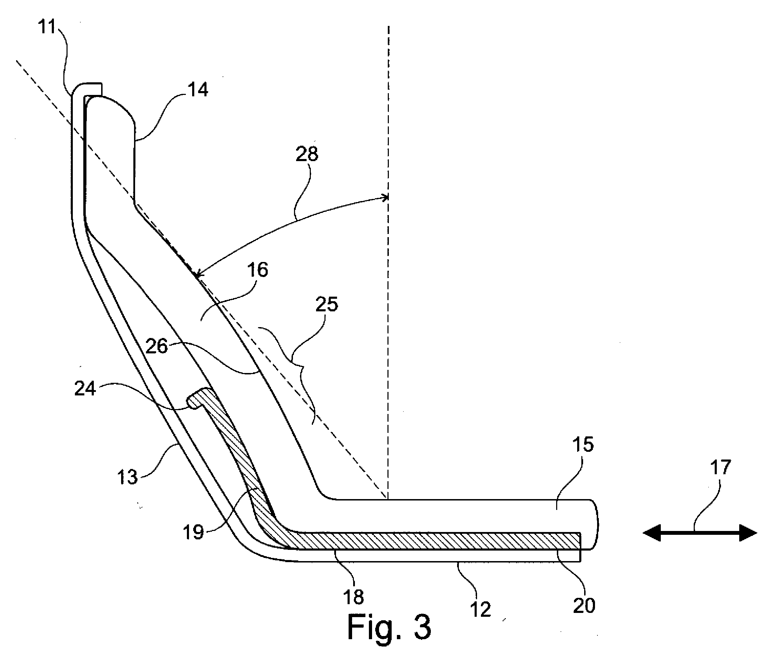

In Fig. 3 wird der Fahrzeugsitz gemäß der ersten Ausführungsform in einer zweiten Position dargestellt. In dieser Position ist die Sitzschale 18 zusammen mit dem Polstersitzanteil 15, welches von der Sitzschale unterseitig gestützt wird, nach vorne geschoben, also in Sitzlängsrichtung 17 verschoben. Hierdurch ergibt sich ein Loslösen bzw. Aufheben eines Kontaktes von der Sitzschale 18 im Rückenabschnitt 19 gegenüber dem Rückenlehnenrahmenbereich 13 in diesem Bereich.

Durch das Nachvorneverschieben der Sitzschale 18 drückt die Kante 24 zusammen mit dem Rückenabschnitt 19 der Sitzschale 18 verstärkt im Lendenwirbelbereich auf das Polsterelement 14, so dass dieses eine Wölbung nach außen erfährt. Hierdurch wird eine verstärkte lordoseunterstützende Stellung im Lendenwirbelbereich 25, in dem die Lendenwirbel einer den Fahrzeugsitz benutzenden Person liegen würden, erhalten. Im oberen Bereich des Polsterrückenanteils 16 findet eine verstärkte Neigung des Polsterrückenanteiles statt. Dies wird mittels des Winkels 28 und durch ein Vergleich mit dem Winkel 27 dargestellt.

Aus einem Vergleich der beiden Darstellung gemäß Fig. 2 und Fig. 3 wird deutlich, dass die Person bei einem nach vorne gezogenen Polstersitzanteils 15 eine verstärkte Neigung ihres Rückens erfährt, wie es durch den Winkel 28 wiedergegeben wird. Zugleich erhält sie eine lordosestützende Wirkung im Bereich der Lendenwirbel, wie es durch die Wölbung 26 wiedergegeben wird. Vorteilhaft wird hierbei der gesamte Sitzrahmen, insbesondere im Rückenlehnenrahmenbereich 13, nicht nach hinten geneigt, so dass die Beinfreiheit der dahinter sitzenden Person nicht beeinträchtigt wird.

Die Sitzschale 18 nimmt die verschiedenen Verschiebestellungen entlang der Sitzlängsrichtung 17 durch unterseitig angeordnete Führungsschienen oder dergleichen ein. Alternativ kann die Sitzschale 18 direkt auf dem Sitzflächenrahmenbereich 12 verschoben werden. Hierbei stützt die Sitzschale unterseitig den Polstersitzanteil auch im vorderen Bereich bezogen auf die Sitzlängsrichtung.

Sämtliche vorgenannten Ausführungen hinsichtlich des Fahrzeugsitzes können selbstverständlich auch auf einen Bürostuhl oder andere derartige Stühle Anwendung finden. Insbesondere die hinsichtlich der Mechanik des Sitzes gemachten Ausführungen sind ebenso auf einen Bürostuhl anwendbar.

### Bezugszeichenliste

- 1: Sitzrahmen (Stand der Technik)
- 2: Sitzflächenrahmenbereich (Stand der Technik)
- 3: Rückenlehnenrahmenbereich (Stand der Technik)
- 4: Polsterelement (Stand der Technik)
- 5: Polsterrückenanteil (Stand der Technik)
- 6: Polstersitzanteil (Stand der Technik)
- 7: Stütze (Stand der Technik)
- 8: Pfeil (Stand der Technik)
- 11: Sitzrahmen
- 12: Sitzflächenrahmenbereich
- 13: Rückenlehnenrahmenbereich
- 14: Polsterelement
- 15: Polstersitzanteil
- 16: Polsterrückenanteil
- 17: Doppelpfeil
- 18: Sitzschale
- 19: Rückenabschnitt
- 20: Sitzflächenabschnitt
- 21: Winkel
- 22: Höhenrichtung
- 23: Entfernung
- 24: Kante
- 25: Lendenwirbelbereich
- 27: Winkel
- 28: Winkel

## Patentansprüche

1. Fahrzeugsitz umfassend einen Sitzrahmen (11) zum Vorgeben einer Sitzform, wobei der Sitzrahmen (11) zumindest einen Rückenlehnenrahmenbereich (13) und einen dazu unbeweglichen Sitzflächenrahmenbereich (12) aufweist,
ein den Sitzrahmen (11) zumindest teilweise kontaktierendes Polsterelement (14), welches zumindest einen Polstersitzanteil (15) aufweist, der in Sitzlängsrichtung (17) gegenüber dem Sitzflächenrahmenbereich (12) bewegbar ist, und einen Polsterrückenanteil (16) aufweist, der zumindest teilweise in Sitzlängsrichtung (17) gegenüber dem Rückenlehnenrahmenbereich (13) bewegbar ist, wobei ein sitzschalenartiges Element (18), welches einen Rückenabschnitt (19) und einen Sitzflächenabschnitt (20) aufweist, zwischen dem Polsterelement (14) und dem Sitzrahmen (11) in Sitzlängsrichtung (17) verschiebbar angeordnet ist, und das sitzschalenartige Element (18) einstückig ausgebildet ist, **dadurch gekennzeichnet, dass**
eine sich im Wesentlichen in Sitzbreitenrichtung erstreckende Kante (24) des Rückenabschnitts (19) angeordnet ist, welche auf Höhe des Lendenwirbelbereichs (25) einer den Fahrzeugsitz benutzenden Person angeordnet ist und in einem links- und rechtsseitigen Bereich mehr nach vorne ausgerichtet und in einem mittleren Bereich wölbungsartig nach hinten geneigt ist.

2. Fahrzeugsitz nach Anspruch 1,
**dadurch gekennzeichnet, dass**
der Rückenabschnitt (19) und der Sitzflächenabschnitt (20) des sitzschalenartigen Elementes (18) mit einem Winkel (21) aus einem Bereich von 80° - 160°, vorzugsweise von 110° - 140°, zueinander angeordnet sind.

3. Fahrzeugsitz nach Anspruch 1 oder 2,
**dadurch gekennzeichnet, dass**
der Rückenabschnitt (19) sich in Sitzhöhenrichtung (22) über eine Entfernung (23) von 10 cm - 70 cm, vorzugsweise von 25 cm - 50 cm, erstreckt.

4. Fahrzeugsitz nach Anspruch 1,
**dadurch gekennzeichnet, dass**,
die Kante (24) derart angeordnet ist, dass bei einem Nachvorneverschieben des sitzschalenartigen Elementes (18) der Polsterrückenanteil (16) durch eine Umlenkung an der Kante (24) eine in Sitzlängsrichtung (17) betrachtet nach vorne gerichtete Auswölbung (26) aufweist.

5. Fahrzeugsitz nach einem der Ansprüche 1-4,
**dadurch gekennzeichne**t, dass,
die Kante als oberseitige Abschlusskante (24) des Rückenabschnittes (19) des sitzschalenartigen Elementes (18) ausgebildet ist.

6. Fahrzeugsitz nach einem der Ansprüche 1-4,
**dadurch gekennzeichnet, dass**,
die Kante als in Sitzlängsrichtung (17) betrachtet vorderseitig am Rückenabschnitt (19) des sitzschalenartigen Elementes (18) angebrachter Vorsprung ausgebildet.

7. Fahrzeugsitz nach einem der vorangegangenen Ansprüche,
**dadurch gekennzeichne**t, dass,
das sitzschalenartige Element (18) einstückig aus Metall ist.

8. Fahrzeugsitz nach einem der vorangegangenen Ansprüche,
**dadurch gekennzeichnet, dass**
das sitzschalenartige Element (18) mittels Führungsschienen und damit wechselwirkenden Führungsnuten mit den Sitzflächenrahmenbereich (12) des Sitzrahmens (11) verschiebbar verbunden ist.

9. Fahrzeugsitz nach einem der vorangegangenen Ansprüche,
**dadurch gekennzeichnet, dass**
der Posterrückenanteil (16) für das Einnehmen verschiedener Verschiebestellungen (Fig. 2; Fig. 3) des sitzschalenartigen Elementes (18) in Höhenrichtung (22) dehnbar und/oder verschiebbar ist.

## Claims

1. Vehicle seat comprising a seat frame (11) for defining a seat shape, the seat frame (11) comprising at least one backrest frame region (13) and a sitting surface frame region (12) which cannot be moved relative thereto, a cushion element (14) which is in contact with the seat frame (11) at least in part and comprises at least one seat cushion portion (15) which is movable in the seat longitudinal direction (17) relative to the sitting surface frame region (12) and comprises a back cushion portion (16) which is movable at least in part in the seat longitudinal direction (17) relative to the backrest frame region (13), a seat-shell-like element (18), which comprises a back portion (19) and a sitting surface portion (20), being arranged so as to be displaceable in the seat longitudinal direction (17) between the cushion element (14) and the seat frame (11), and the seat-shell-like element (18) being formed in one piece, **characterised in that**
an edge (24), extending substantially in the seat width direction, of the back portion (19) is arranged at the level of the lumber vertebrae region (25) of a person using the vehicle seat, and is oriented so as to be further forward in a left-hand and a right-hand region and is inclined towards the rear in the manner of a bulge in a central region.

2. Vehicle seat according to claim 1,
**characterised in that**
the back portion (19) and the sitting surface portion (20) of the seat-shell-like element (18) are arranged at an angle (21) in a range of from 80° - 160°, preferably of from 110° - 140°, relative to one another.

3. Vehicle seat according to either claim 1 or claim 2,
**characterised in that**
the back portion (19) extends in the seat height direction (22) over a distance (23) of from 10 cm - 70 cm, preferably of from 25 cm - 50 cm.

4. Vehicle seat according to claim 1,
**characterised in that**,
the edge (24) is arranged such that, when the seat-shell-like element (18) is slid forwards, the back cushion portion (16) has a bulge (26), which points towards the front when viewed in the seat longitudinal direction (17), caused by a deflection on the edge (24).

5. Vehicle seat according to any of claims 1 to 4,
**characterised in that**
the edge is formed as an upper end edge (24) of the back portion (19) of the seat-shell-like element (18).

6. Vehicle seat according to any of claims 1 to 4,
**characterised in that**,
when viewed in the seat longitudinal direction (17), the edge is formed as a projection attached to the front side on the back portion (19) of the seat-shell-like element (18).

7. Vehicle seat according to any of the preceding claims,
**characterised in that**
the seat-shell-like element (18) is made in one piece from metal.

8. Vehicle seat according to any of the preceding claims,
**characterised in that**
the seat-shell-like element (18) is displaceably connected to the sitting surface frame region (12) of the seat frame (11) by means of guide rails and guide grooves which interact therewith.

9. Vehicle seat according to any of the preceding claims,
**characterised in that**
the back cushion part (16) can be extended and/or displaced in the vertical direction (22) in order for the seat-shell-like element (18) to assume various displacement positions (fig. 2; fig. 3).

## Revendications

1. Siège de véhicule, comportant un cadre de siège (11) pour donner une forme au siège, ledit cadre de siège (11) comportant au moins une zone de cadre formant le dossier (13) et une zone de cadre formant l'assise (12) immobile par rapport à cette dernière,
un élément de rembourrage (14), qui entre en contact au moins partiellement avec le cadre de siège (11) et qui comporte au moins une partie de rembourrage d'assise (15), laquelle est mobile dans le sens longitudinal (17) du siège par rapport à la zone de cadre formant l'assise (12) et une partie de rembourrage de dossier (16), qui est mobile au moins partiellement dans le sens longitudinal (17) du siège par rapport à la zone de cadre formant le dossier (13), un élément (18) en forme de coque, qui comporte une partie formant le dossier (19) et une partie formant l'assise (20), étant disposé de manière mobile dans le sens longitudinal (17) du siège entre l'élément de rembourrage (14) et le cadre de siège (11), et l'élément (18) en forme de coque étant réalisé d'un seul tenant,
**caractérisé en ce qu'**il est prévu un bord (24) de la partie formant le dossier (19), lequel s'étend sensiblement dans le sens de la largeur du siège et lequel est disposé à hauteur de la zone lombaire (25) d'une personne occupant le siège et est orienté davantage vers l'avant dans une zone du côté gauche et du côté droit et est incliné vers l'arrière en forme de bombement dans une zone centrale.

2. Siège de véhicule selon la revendication 1, **caractérisé en ce que** la partie formant le dossier (19) et la partie formant l'assise (20) de l'élément (18) en forme de coque sont disposées l'une par rapport à l'autre en formant un angle (21) dans une plage de 80° à 160°, de préférence de 110° à 140°.

3. Siège de véhicule selon la revendication 1 ou 2, **caractérisé en ce que** la partie formant le dossier (19) s'étend dans le sens de la hauteur (22) du siège sur une distance (23) de 10 cm à 70 cm, de préférence de 25 cm à 50 cm.

4. Siège de véhicule selon la revendication 1, **caractérisé en ce que** le bord (24) est disposé de telle sorte que, lorsque l'élément (18) en forme de coque effectue un mouvement vers l'avant, la partie de rembourrage de dossier (16) comporte, sous l'effet d'une déviation sur le bord (24), un bombement (26) orienté vers l'avant par référence au sens longitudinal (17) du siège.

5. Siège de véhicule selon l'une quelconque des revendications 1 à 4, **caractérisé en ce que** le bord est réalisé sous la forme d'un bord final (24) supérieur de la partie formant le dossier (19) de l'élément (18) en forme de coque.

6. Siège de véhicule selon l'une quelconque des revendications 1 à 4, **caractérisé en ce que** le bord est réalisé sous la forme d'une saillie, disposée sur la face avant, par référence au sens longitudinal (17) du siège, sur la partie formant le dossier (19) de l'élément (18) en forme de coque.

7. Siège de véhicule selon l'une quelconque des revendications précédentes, **caractérisé en ce que** l'élément (18) en forme de coque est réalisé d'un seul tenant en métal.

8. Siège de véhicule selon l'une quelconque des revendications précédentes, **caractérisé en ce que** l'élément (18) en forme de coque est relié de manière mobile à la zone de cadre formant l'assise (12) du cadre de siège (11), au moyen de rails de guidage et de rainures de guidage interagissant avec ceux-ci.

9. Siège de véhicule selon l'une quelconque des revendications précédentes, **caractérisé en ce que** la partie de rembourrage de dossier (16) est extensible et/ou mobile dans le sens de la hauteur (22) pour pouvoir prendre les différentes positions de déplacement (figure 2 ; figure 3) de l'élément (18) en forme de coque.
